# EUROPEAN PATENT SPECIFICATION

(11) **EP 1 382 991 B1**
(45) Date of publication and mention of the grant of the patent: **05.10.2011**
(21) Application number: 03253050.3
(22) Date of filing: 15.05.2003
(51) Int. Cl.: G02F 1/13

(54) **Display apparatus**
Anzeigevorrichtung
Appareil d'affichage

(30) Priority: 16.07.2002 KR 2002041614
(43) Date of publication of application: 21.01.2004
(73) Proprietor: SAMSUNG ELECTRONICS CO., LTD., Suwon-si, Gyeonggi-do 442-742 (KR)
(72) Inventor: Kim, Kwey-hyun, Suwon-city, Kyungki-do (KR)
(74) Representative: Walaski, Jan Filip

(56) References cited:
- EP-A- 0 880 049
- EP-A- 1 150 199
- US-A- 6 094 340
- US-A1- 2001 050 732
- US-A1- 2002 057 237
- US-A1- 2002 080 297

## Description

The present invention relates to a display apparatus comprising first and second covers and a display panel disposed therebetween, the first cover having a skirt part, the margin of the display panel is held by a frame member and the frame member is coupled to the skirt part of the first cover.

A display apparatus collectively refers to monitors for TV sets or computer systems, and includes CRT (cathode ray tube) monitors, LCD (liquid crystal display) monitors, etc.

CRT monitors employ the principle that when various electron beams, according to the intensity of picture signals, strike a monochrome or RGB (red, green, blue) fluorescent material coated on a CRT panel, light having different brightness and various colours is generated. CRT monitors are widely used due to their relatively low cost and good display quality, but they occupy a relatively large space because of their bulky size.

LCD monitors employ the principle that when a voltage is applied to a liquid crystal, the molecular arrangement of the liquid crystal changes, so as to block the passage of light. Although LCD monitors are thin, they are expensive and have a poor display quality, in comparison with CRT monitors.

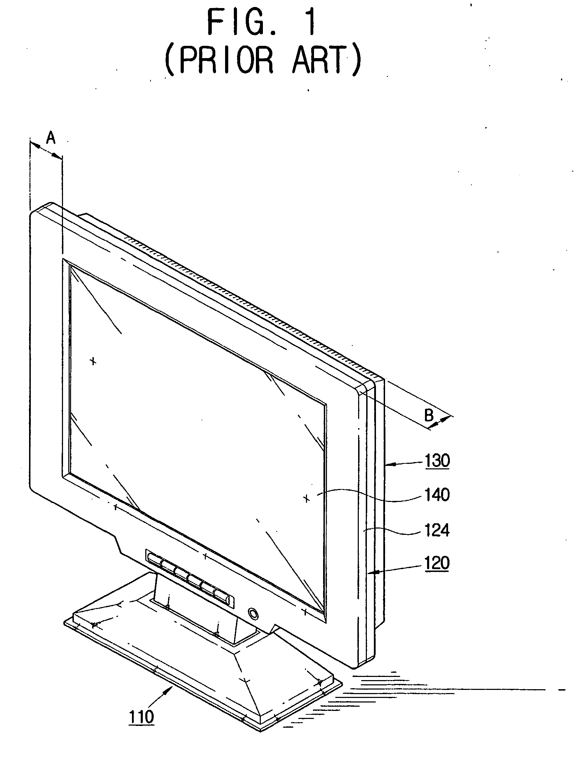

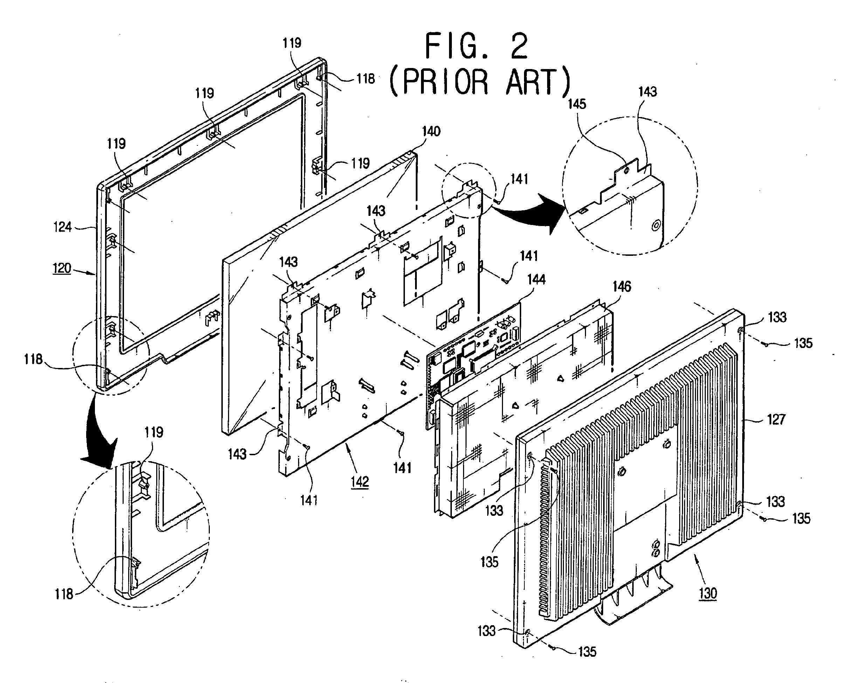

Figure 1 is a perspective view of a conventional display apparatus. Figure 2 is an exploded perspective view of the display apparatus of Figure 1.

Referring to Figures 1 and 2, a conventional display apparatus comprises a foot (or base part) 110 for supporting the apparatus on a surface, an LCD panel 140 displaying a picture thereon, a chassis (or panel supporting member) 142 supporting the LCD panel 140, a PCB (printed circuit board) assembly 144 supported by a PCB cover 146 and applying a voltage to the LCD panel 140, a front cover 120 placed in front of the LCD panel 140, and a rear cover 130 placed behind the LCD panel 140 and combined with the front cover 120.

On the rear of the front cover 120 are formed a plurality of first bosses 118 and a plurality of second bosses 119 adjacent to the first bosses 118. Each first boss 118 has a female thread and is combined with a first screw 135 passed through a first through hole 133 formed on the rear cover 130. Furthermore, each second boss 119 has a female thread and is combined with a second screw 141 passed through a second through hole 145 formed on a tab (or side flange part) 143 of the chassis 142.

The conventional display apparatus described above is assembled as follows. First, the LCD panel 140 is supported by the chassis 142, with the effective surface of the LCD panel 140 facing forward. Thereafter, the second through holes 145 formed on the tabs 143 of the chassis 142 are aligned with the second bosses 119 formed on the rear of the front cover 120. Next, the second screws 141 are coupled with the second bosses 119 through the second through holes 145, so that the chassis 142 is fastened to the front cover 120, with the LCD panel 140 being disposed therebetween. Thereafter, the PCB assembly 144 is installed on the back of the chassis 142, and covered with the PCB cover 146 which is combined with the back of the chassis 142. Next, the first through holes 133 formed on the rear cover 130 are aligned with the first bosses 118 formed on the rear of the front cover 120. Thereafter, the first screws 135 are coupled with the first bosses 118 through the first through holes 133, so that the conventional display apparatus is completely assembled.

However, in the conventional display apparatus, the front panel 120 requires a sufficient space for the chassis 142 and the rear cover 130 to be fastened to, and the required space causes the width "A" of a front face 124 of the front cover 120 to be increased. Furthermore, in the conventional display apparatus, the chassis 142, the LCD panel 140, the PCB cover 146, and the PCB assembly 144 are all provided between the front and rear covers 120 and 130, and the inclusion of the chassis 142 and the PCB cover 146 cause the thickness "B" of the display apparatus to be increased.

The more the width "A" of the front face 124 and the thickness "B" of the display apparatus are increased, the more space is needed for installing, carrying and storing the display apparatus. Furthermore, the conventional display apparatus is not adapted for a slim and compact design. Moreover, the enlarged front face 124 creates the illusion that the effective surface of the LCD panel 140 looks relatively small.

Furthermore, because the chassis 142 supporting the LCD panel 140 and the PCB cover 146 covering the PCB assembly 144 are separately provided between the front and rear covers 120 and 130, the display apparatus is cumbersome and takes a relatively long time to assemble.

US-A-2001/0050732 describes a display apparatus having the pre-characterising features of claim 1.

A display apparatus, according to the present invention, is characterised in that the frame member is releasably coupled to the rear cover by means of screws.

Preferably, the front cover and the rear cover are conductive, i.e. at least a part of each cover is conductive so as to produce an EMI shielding effect. More preferably, the front cover and the rear cover are made of metal.

The frame member is releasably coupled to a plurality of separate replaceable parts disposed on the rear cover. Even more preferably, the plurality of separate replaceable parts are conductive.

Display devices will now be described, by way of example, with reference to Figures 3 to 7 of the accompanying drawings, in which:
Figure 1 is a perspective view of a conventional display apparatus;
Figure 2 is an exploded perspective view of the display apparatus of Figure 1;
Figure 3 is a perspective view of a display apparatus;
Figure 4 is an exploded perspective view of the display apparatus of Figure 3;
Figure 5 is a partial sectional view of the display apparatus, taken along line V-V in Figure 3;
Figure 6 is a partial sectional view of the display apparatus, taken along line VI-VI in Figure 3; and
Figure 7 is a partial sectional view of an embodiment of a display apparatus according to the present invention.

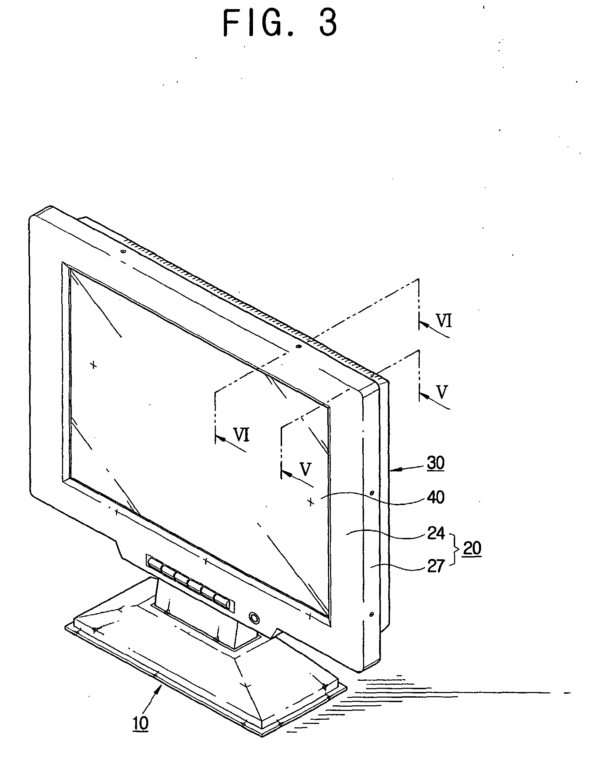

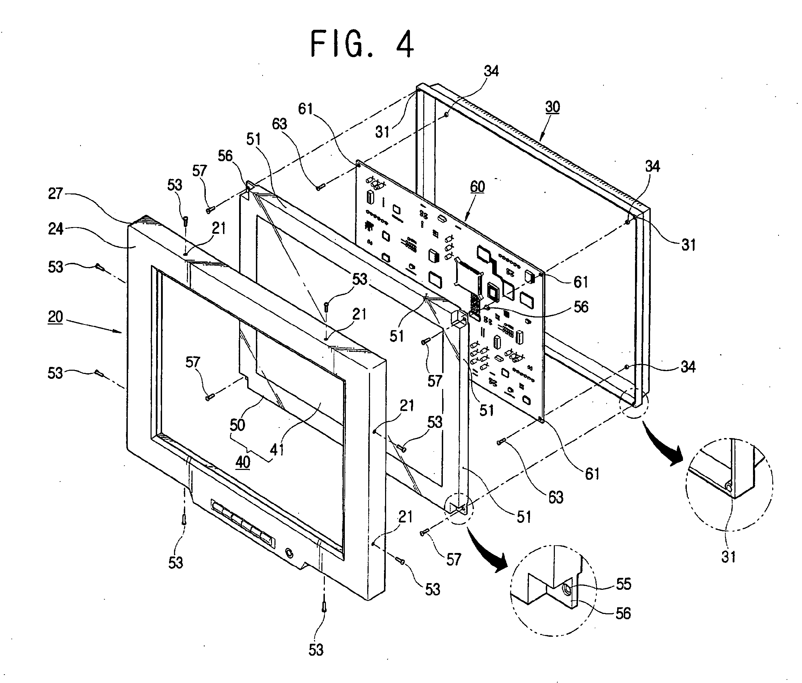

Referring to Figures 3 and 4, a first comparative example comprises a foot (or base part) 10 for supporting the apparatus on a surface such as a desk, a wall, etc., an LCD panel 40 having a display part 41 displaying a picture thereon, a PCB assembly 60 placed behind the LCD panel 40 for applying a voltage to the LCD panel 40, a front cover 20 placed in front of the LCD panel 40 and covering edges of the LCD panel 40, and a rear cover 30 combined with the rear of the LCD panel 40 and accommodating the PCB assembly 60.

The foot 10 is disposed at a lower portion of the display apparatus, and combined to at least one of the front cover 20 and the rear cover 30, thereby supporting the LCD panel 40, the front cover 20, the rear cover 30, etc.

The LCD panel 40 varies the molecular arrangement of the liquid crystal when a voltage is applied to the liquid crystal by the PCB assembly 60 so as to block the passage of light, thereby displaying a picture. Furthermore, the LCD panel 40 includes the display part 41 displaying a picture thereon, and an LCD frame 50 provided at the edges of the LCD panel 40 and preventing the liquid crystal from leaking.

The LCD frame 50 includes a plurality of female threaded holes (or first combining parts) 51 formed on peripheral sides of the LCD frame 50 and each having a female thread, and a plurality of holes (or second combining parts) 55 formed through respective corners of the LCD frame 50. The LCD frame 50 is generally made of a conductive metal so as to shield the LCD panel 40 from EMI (electromagnetic interference).

Two female threaded holes 51 are provided on each peripheral side of the LCD frame 50, and each female threaded hole 51 is coupled with a first screw 53 (to be described later) through a first through hole 21 (to be described later) of the front cover 20.

The hole 55 is formed in a flange (or combining supporting part) 56 formed at each corner of the LCD frame 50, in the direction perpendicular to the surface of the LCD panel 40, so that a second screw 57 (to be described later) is passed through each hole 55 and coupled with a threaded tubular part (or boss part) 31 (to be described later) of the rear cover 30, respectively.

The front cover 20 includes a front face 24 having a front opening through which the display part 41 of the LCD panel 40 is exposed, and a skirt part 27 bent from each edge of the front face 24 toward the rear cover 30. The front face 24 covers the LCD frame 50. The skirt part 27 is formed with the plurality of first through holes 21 corresponding to the female threaded holes 51 of the LCD frame 50. It is preferable that the front cover 20 is manufactured by die-casting or compression moulding magnesium alloy. However, the front cover 20 may be manufactured by die-casting or compression moulding aluminium, or by injection moulding plastic materials.

The rear cover 30 includes the plurality of threaded tubular parts (or boss parts) 31 formed as a single body with the rear cover 30, provided in correspondence to the holes 55 of the LCD frame 50 and each having a female thread, and a plurality of PCB boss parts 34 provided in correspondence to second through holes 61 (to be described later) of the PCB assembly 60 and each having a female thread to be coupled with a third screw 63. It is preferable that the rear cover 30 is manufactured by die-casting of a magnesium alloy material so as to shield the LCD panel 40 and the PCB assembly 60 from EMI. However, the rear cover 30 may be manufactured by moulding the conductive magnesium alloy, or by compression moulding a conductive steel sheet such as a tin-zinc plated steel sheet, a cold rolled steel sheet, etc.

The PCB assembly 60 is placed behind the LCD panel 40, applies a voltage to the LCD panel 40, and is provided with the plurality of second through holes 61 through which the third screws 63 pass and are coupled with the PCB boss parts 34 of the rear cover 30 so as to fasten the PCB assembly 60 to the rear cover 30.

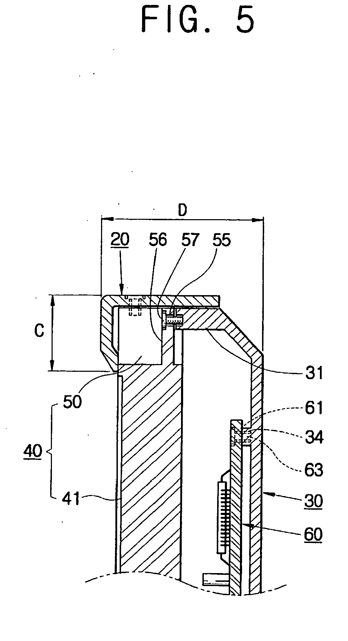

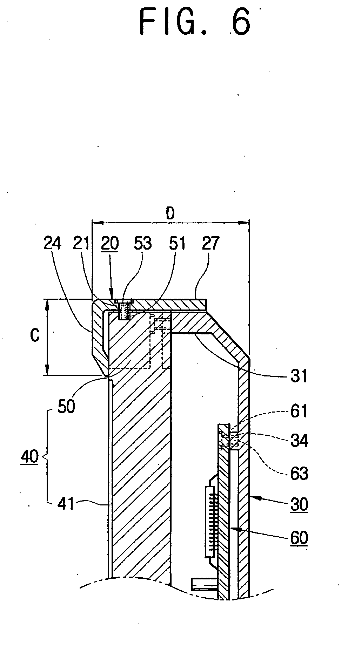

Referring to Figures 5 and 6, the process of assembling the display apparatus will now be described.

First, the third screws 63 are passed through the second through holes 61 of the PCB assembly 60 and are coupled with the PCB boss parts 34 of the rear cover 30. Thereafter, the second screws 57 are passed through the holes 55 of the LCD frame 50 and are coupled with the threaded tubular parts 31 of the rear cover 30, with the display part 41 of the LCD panel 40 facing forward (see Figure 5). Next, the first screws 53 are passed through the first through holes 21 formed on the skirt part 27 of the front cover 20 and are coupled with the female threaded holes 51 of the LCD frame 50, with the LCD panel 40 being received within the skirt part 27 (see Figure 6). Thereafter, the foot 10 is combined to at least one of the front cover 20 and the rear cover 30 (this is not illustrated), so that the display apparatus is completely assembled.

Therefore, as shown in Figures 5 and 6, the skirt part 27 of the front cover 20 is directly combined with the LCD frame 50 of the LCD panel 40, so that the width "C" of the front face 24 of the front cover 20 is decreased. Furthermore, only the LCD panel 40 and the PCB assembly 60 are provided between the front and rear covers 20 and 30, so that the thickness "D" of the display apparatus is decreased. Moreover, there is no necessity for some components, such as a chassis and a PCB cover, so the display apparatus can be easily and quickly assembled. Furthermore, the front and rear covers 20 and 30 are made of the conductive metal, so that the LCD panel 40 and the PCB assembly 60 are effectively shielded from EMI.

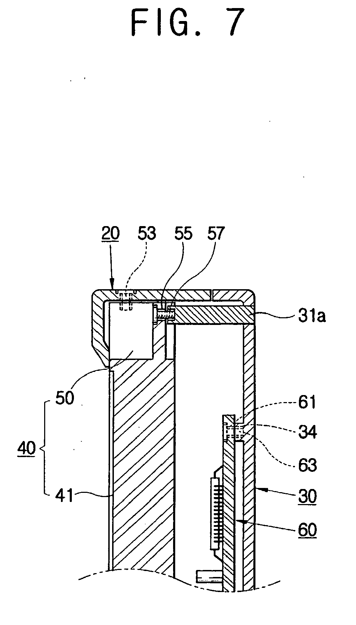

Referring to Figure 7, in contrast to the threaded tubular part 31 formed in the rear cover 30 of the comparative example, in the embodiment there is provided a pillar (or stud) 31a having a female thread to be coupled with the hole 55 of the LCD frame 50. It is preferable that the pillar 31a is made of conductive metal.

In the comparative example, if the threaded tubular part 31 of the rear cover 30 is worn or broken, the rear cover 30 may need to be replaced in its entirety. However, in the embodiment, if the pillar 31a of the rear cover 30 is worn or broken, the pillar 31a can be replaced without replacing the entire rear cover 30. That is, the embodiment has certain improvements in comparison with the comparative example.

As described above, the display apparatus comprises the front cover placed in front of the LCD panel, and the rear cover placed behind the LCD panel, where the front and rear covers are directly combined to the LCD frame provided in the edges of the LCD panel, thereby decreasing a space for installing, carrying and storing the display apparatus, making the outer appearance thereof slim and compact, and preventing an illusion that the display part of the LCD panel is relatively small. Furthermore, the display apparatus need not comprise some components such as a chassis and a PCB cover, so that the display apparatus can be quickly and easily assembled. Furthermore, the front and rear covers are made of conductive metal, so that the LCD panel and the PCB assembly are effectively shielded from EMI.

As described above, a display apparatus is provided, which minimises the space required for installation, carriage and storage, has a slim and compact appearance, and prevents the illusion that a display part of an LCD panel is relatively small.

Furthermore, a display apparatus is provided, which need not comprise some components such as a chassis and a PCB cover, thereby being quick and easy to assemble.

Furthermore, a display apparatus is provided in which the front and rear covers of which are made of a conductive metal, so that an LCD panel and a PCB assembly are effectively shielded from EMI.

## Claims

1. A display apparatus comprising:
a liquid crystal display (LCD) panel (40);
an LCD frame (50) surrounding the panel at a periphery thereof, said LCD frame comprising a plurality of first combining parts (51) formed on a peripheral side of the LCD frame and a plurality of second combining parts (55, 56) formed in the plane of the LCD frame;
a front cover (20) disposed in front of the LCD panel so as to cover the edges of the panel, said front cover being arranged to combine with at least one of the first combining parts; and
a rear cover (30) disposed behind the LCD panel and being arranged to combine with at least one of the second combining parts;
wherein, the front cover is directly combined with the LCD frame by the first combining parts, and the front cover is formed with a plurality of through holes (21) which correspond to the first combining parts,
**characterised by** a plurality of replaceable pillars (31a) releasably coupling the rear cover (30) to the second combining parts (55) of the LCD frame by means of screws (57).

2. A display apparatus according to claim 1, wherein the second combining parts are formed through corners of the LCD frame.

3. An apparatus according to claim 1 or 2, wherein the front cover (20) and the rear cover (30) are electrically conductive.

4. An apparatus according to claim 3, wherein the front cover (20) and the rear cover (30) are made of metal.

5. An apparatus according to claim 1, where the plurality of separate replaceable pillars (31a) are electrically conductive.

6. An apparatus according to claim 1, further comprising:
a printed circuit board (PCB) assembly (60) placed behind the LCD panel (40), to supply electric current to the LCD panel (40).

7. An apparatus according to claim 1, wherein the first combining parts comprise a plurality of female threads, and the front cover (20) is formed with a plurality of through holes corresponding to the female threads, and the rear cover (30) has a plurality of boss parts (31) each having a female thread corresponding to the frame member (50).

8. An apparatus according to claim 6, wherein the PCB assembly (60) is coupled to the rear cover (30).

9. An apparatus according to claim 1, wherein the rear cover is made of a conductive metal.

10. An apparatus according to claim 1, wherein the front cover (20) is made of either injection-moulded plastic or a conductive metal.

11. An apparatus according to claim 1, wherein the front cover (20) is manufactured by either die-casting or compression moulding aluminium.

12. An apparatus according to claim 1, wherein the rear cover (30) is manufactured by die-casting of alloyed magnesium materials.

13. An apparatus according to claim 1, wherein the rear cover (30) is manufactured by either moulding a conductive magnesium alloy or compression moulding a conductive steel sheet.

14. A method of assembling a display apparatus, the method comprising:
disposing a liquid crystal display (LCD) panel (40) between a front and rear cover (20, 30), wherein an LCD frame (50) surrounds the panel at a periphery thereof, said LCD frame comprising a plurality of first combining parts (51) formed on a peripheral side of the LCD frame and a plurality of second combining parts (55, 56) formed in the plane of the LCD frame;
wherein the front cover (20) is disposed in front of the LCD panel so as to cover the edges of the panel, said front cover combining with at least one of the first combining parts; and
the rear cover (30) is disposed behind the LCD panel and combining with at least one of the second combining parts;
wherein, the front cover is directly combined with the LCD frame by the first combining parts, and the front cover is formed with a plurality of through holes (21) which correspond to the first combining parts, **characterised by**
releasably coupling the rear cover (30) to the second combining parts (55) of the LCD frame with a plurality of replaceable pillars (31a) by means of screws (57).

## Patentansprüche

1. Anzeigevorrichtung, umfassend:
eine (LCD-) Flüssigkristallanzeigetafel (40);
einen LCD-Rahmen (50), der die Tafel an einer Peripherie davon umgibt, wobei besagter LCD-Rahmen eine Vielheit von ersten verbindenden Teilen (51), die auf einer peripheren Seite des LCD-Rahmens gebildet sind und eine Vielheit von zweiten verbindenden Teilen (55, 56) umfasst, die in der Ebene des LCD-Rahmens gebildet sind;
eine vordere Abdeckung (20), die vor der LCD-Tafel angeordnet ist, um die Kanten der Tafel abzudecken, wobei besagte vordere Abdeckung eingerichtet ist, sich mit zumindest einem der ersten Verbindungsteile zu kombinieren; und
eine hintere Abdeckung (30), die hinter der LCD-Tafel angeordnet und eingerichtet ist, sich mit zumindest einem der zweiten Verbindungsteile zu kombinieren;
wobei die vordere Abdeckung durch die ersten Verbindungsteile direkt mit dem LCD-Rahmen kombiniert ist und die vordere Abdeckung mit einer Vielheit von Durchgangslöchern (21) gebildet ist, die den ersten Verbindungsteilen entsprechen,
**gekennzeichnet durch** eine Vielheit ersetzbarer Säulen (31a), welche die hintere Abdeckung (30) mittels der Schrauben (57) lösbar an die zweiten Verbindungsteile (55) des LCD-Rahmens koppeln.

2. Anzeigevorrichtung nach Anspruch 1, wobei die zweiten Verbindungsteile durch Ecken des LCD-Rahmens gebildet sind.

3. Vorrichtung nach Anspruch 1 oder 2, wobei die vordere Abdeckung (20) und die hintere Abdeckung (30) elektrisch leitend sind.

4. Vorrichtung nach Anspruch 3, wobei die vordere Abdeckung (20) und die hintere Abdeckung (30) aus Metall hergestellt sind.

5. Vorrichtung nach Anspruch 1, wobei die Vielheit von separat ersetzbaren Säulen (31a) elektrisch leitend ist.

6. Vorrichtung nach Anspruch 1, weiter umfassend:
eine Leiterplattenbaugruppe (60), die hinter der LCD-Tafel (40) platziert ist, um elektrischen Strom zur LCD-Tafel (40) zu liefern.

7. Vorrichtung nach Anspruch 1, wobei die ersten Verbindungsteile eine Vielheit von Innengewinden umfasst und die vordere Abdeckung (20) mit einer Vielheit von Durchgangslöchern gebildet ist, die den Innengewinden entsprechen und die hintere Abdeckung (30) eine Vielheit von Nabenteilen (31) aufweist, wobei jedes ein Innengewinde hat, das dem Rahmenelement (50) entspricht.

8. Vorrichtung nach Anspruch 6, wobei die Leiterplattenbaugruppe (60) an die hintere Abdeckung (30) gekoppelt ist.

9. Vorrichtung nach Anspruch 1, wobei die hintere Abdeckung aus leitendem Metall hergestellt ist.

10. Vorrichtung nach Anspruch 1, wobei die vordere Abdeckung (20) entweder aus gespritztem Kunststoff oder einem leitenden Metall hergestellt ist.

11. Vorrichtung nach Anspruch 1, wobei die vordere Abdeckung (20) durch entweder Druckgießen oder Formpressen von Aluminium hergestellt ist.

12. Vorrichtung nach Anspruch 1, wobei die hintere Abdeckung (30) durch Druckgießen von legierten Magnesiummaterialien hergestellt ist.

13. Vorrichtung nach Anspruch 1, wobei die hintere Abdeckung (30) entweder durch Formen einer leitenden Magnesiumlegierung oder Formpressen eines leitenden Stahlblechs hergestellt ist.

14. Verfahren zur Montage einer Anzeigevorrichtung, wobei das Verfahren umfasst:
Anordnen einer (LCD-) Flüssigkristallanzeigetafel (40) zwischen einer vorderen und hinteren Abdeckung (20, 30), wobei ein LCD-Rahmen (50) die Tafel an einer Peripherie davon umgibt, wobei besagter LCD-Rahmen eine Vielheit von ersten verbinden Teilen (51), die auf einer peripheren Seite des LCD-Rahmens gebildet sind und eine Vielheit von zweiten verbindenden Teilen (55, 56) umfasst, die in der Ebene des LCD-Rahmens gebildet sind;
wobei die vordere Abdeckung (20) vor der LCD-Tafel angeordnet ist, um die Kanten der Tafel abzudecken, wobei sich besagte vordere Abdeckung mit zumindest einem der ersten Verbindungsteile kombiniert; und
die hintere Abdeckung (30) hinter der LCD-Tafel angeordnet ist und sich mit zumindest einem der zweiten Verbindungsteile kombiniert;
wobei die vordere Abdeckung direkt mit dem LCD-Rahmen durch die ersten Verbindungsteile kombiniert ist und die vordere Abdeckung mit einer Vielheit von Durchganglöchern (21) gebildet ist, die den ersten Verbindungsteilen entsprechen, **gekennzeichnet durch**
lösbares Koppeln der hinteren Abdeckung (30) an die zweiten Verbindungsteile (55) des LCD-Rahmens mit einer Vielheit ersetzbarer Säulen (31a) mittels der Schrauben (57).

## Revendications

1. Appareil d'affichage comprenant :
un panneau d'affichage à cristaux liquides (LCD) (40) ;
un cadre de LCD (50) entourant le panneau sur un pourtour de celui-ci, ledit cadre du LCD comprenant une pluralité de premières pièces de combinaison (51) formées sur un côté périphérique du cadre du LCD et une pluralité de deuxièmes pièces de combinaison (55, 56) formées dans le plan du cadre du LCD ;
un couvercle avant (20) disposé devant le panneau LCD de manière à couvrir les bords du panneau, ledit couvercle avant étant agencé de façon à se combiner avec au moins une des premières pièces de combinaison ; et
un couvercle arrière (30) disposé derrière le panneau LCD et étant agencé de façon à se combiner avec au moins une des deuxièmes pièces de combinaison ;
dans lequel le couvercle avant est combiné directement avec le cadre du LCD par les premières pièces de combinaison, et le couvercle avant est formé avec une pluralité de trous débouchants (21) qui correspondent aux premières pièces de combinaison,
**caractérisé par** une pluralité de montants remplaçables (31a) accouplant de manière dégageable le couvercle arrière (30) aux deuxièmes pièces de combinaison (55) du cadre du LCD au moyen de vis (57).

2. Appareil d'affichage selon la revendication 1, dans lequel les deuxièmes pièces de combinaison sont formées à travers les coins du cadre du LCD.

3. Appareil selon la revendication 1 ou 2, dans lequel le couvercle avant (20) et le couvercle arrière (30) sont électriquement conducteurs.

4. Appareil selon la revendication 3, dans lequel le couvercle avant (20) et le couvercle arrière (30) sont faits en métal.

5. Appareil selon la revendication 1, où la pluralité de montants remplaçables séparés (31a) sont électriquement conducteurs.

6. Appareil selon la revendication 1, comprenant en outre :
un ensemble carte de circuit imprimé (PCB) (60) placé derrière le panneau LCD (40), pour alimenter du courant électrique au panneau LCD (40).

7. Appareil selon la revendication 1, dans lequel les premières pièces de combinaison comprennent une pluralité de filets femelles, et le couvercle avant (20) est formé avec une pluralité de trous débouchants correspondant aux filets femelles, et le couvercle arrière (30) a une pluralité de bossages (31) ayant chacun un filet femelle correspondant à l'élément cadre (50).

8. Appareil selon la revendication 6, dans lequel l'ensemble PCB (60) est accouplé au couvercle arrière (30).

9. Appareil selon la revendication 1, dans lequel le couvercle arrière est fait en un métal conducteur.

10. Appareil selon la revendication 1, dans lequel le couvercle avant (20) est fait soit en plastique moulé par injection, soit en métal conducteur.

11. Appareil selon la revendication 1, dans lequel le couvercle avant (20) est fabriqué soit par moulage sous pression, soit par moulage par compression d'aluminium.

12. Appareil selon la revendication 1, dans lequel le couvercle arrière (30) est fabriqué par moulage sous pression de matériaux en magnésium allié.

13. Appareil selon la revendication 1, dans lequel le couvercle arrière (30) est fabriqué soit par moulage d'un alliage de magnésium conducteur, soit par moulage par compression d'une tôle d'acier conductrice.

14. Procédé d'assemblage d'un appareil d'affichage, ce procédé comprenant :
la disposition d'un panneau d'affichage à cristaux liquides (LCD) (40) entre un couvercle avant et un couvercle arrière (20, 30), dans lequel un cadre de LCD (50) entoure le panneau sur un pourtour de celui-ci, ledit cadre du LCD comprenant une pluralité de premières pièces de combinaison (51) formées sur un côté périphérique du cadre du LCD et une pluralité de deuxièmes pièces de combinaison (55, 56) formées dans le plan du cadre du LCD ;
dans lequel le couvercle avant (20) est disposé devant le panneau LCD de manière à couvrir les bords du panneau, ledit couvercle avant se combinant avec au moins une des premières pièces de combinaison ; et
le couvercle arrière (30) est disposé derrière le panneau LCD et se combine avec au moins une des deuxièmes pièces de combinaison ;
dans lequel le couvercle avant est combiné directement avec le cadre du LCD par les premières pièces de combinaison, et le couvercle avant est formé avec une pluralité de trous débouchants (21) qui correspondent aux premières pièces de combinaison,
**caractérisé par** l'accouplement dégageable du couvercle arrière (30) aux deuxièmes pièces de combinaison (55) du cadre du LCD avec une pluralité de montants remplaçables (31a) au moyen de vis (57).
